# EUROPEAN PATENT SPECIFICATION

(11) **EP 3 751 551 B1**
(45) Date of publication and mention of the grant of the patent: **10.12.2025**
(21) Application number: 20178134.1
(22) Date of filing: 03.06.2020
(51) Int. Cl.: G09G 3/20, G09G 5/10, G06F 3/14

(54) **LRUS AND RELATED NIGHT VISION DISPLAY HARMONIZATION METHODS**
LRUS UND ZUGEHÖRIGE NACHTSICHTANZEIGEHARMONISIERUNGSVERFAHREN
UNITÉS REMPLAÇABLES EN LIGNE ET PROCÉDÉS D'HARMONISATION DE L'AFFICHAGE DE VISION NOCTURNE

(30) Priority: 12.06.2019 IN 201941023368; 06.09.2019 US 201916563660
(43) Date of publication of application: 16.12.2020
(73) Proprietor: Honeywell International Inc., Charlotte, NC 28202 (US)
(72) Inventor: POULOSE, Ezekiel, Morris Plains, NJ New Jersey 07950 (US); SAXENA, Sunit, Morris Plains, NJ New Jersey 07950 (US); SURE, Anita, Morris Plains, NJ New Jersey 07950 (US)
(74) Representative: Ingrassia, Fisher & Lorenz UK Ltd.

(56) References cited:
- US-A1- 2008 316 222
- US-A1- 2013 249 404

## Description

### TECHNICAL FIELD

The subject matter described herein relates generally to vehicle systems, and more particularly, embodiments of the subject matter relate to harmonizing onboard displays for night vision operations.

### BACKGROUND

Modern vehicles often include a multiple displays for presenting information to a vehicle operator. For example, flight deck displays (or cockpit displays) for an aircraft may include primary flight displays (PFDs), multifunction displays, lateral map displays, synthetic vision displays, and the like, in addition to any number of electronic flight instrument displays. Often, these displays are provided using line replaceable unit (LRUs), which may vary from aircraft to aircraft depending on operator preferences. Depending on the particular configuration, the onboard LRUs may be provided by different manufacturers and exhibit different performance characteristics with respect to one another. Additionally, LRUs may be updated or replaced over time, such that newer LRUs may utilize different technologies or hardware than older legacy LRUs previously onboard the aircraft. The potential performance variations across onboard display LRUs complicates cockpit integration and fleet management for night vision operation when using a common control signal across all display LRUs. Accordingly, it is desirable to provide methods and systems for harmonizing display characteristics across LRUs in a manner that reduces the time or manual overhead required and does not require additional hardware components. Other desirable features and characteristics will become apparent from the subsequent detailed description and the appended claims, taken in conjunction with the accompanying drawings and this background. Documents cited during prosecution include US 2013/249404 A1.

### BRIEF SUMMARY

Aspects and preferred embodiments of the invention are defined in the appended claims. Disclosed herein are methods, devices and systems for harmonizing a display characteristic of a component onboard a vehicle with other components onboard the vehicle coupled to a common command bus. A method involves obtaining adjustments for achieving a desired behavior for the display characteristic at different states of a display command input to the component from the common command bus, resulting in a plurality of data points maintaining associations between a respective adjustment and a respective state for the display command input, determining calibration information for a range of the display command input based on relationships between the adjustments and the different states for the display command input using the plurality of data points, maintaining the calibration information in a data storage element, and automatically adjusting operation of the component based on a subsequent state of the display command input to the component in accordance with the calibration information.

Also disclosed herein is a line-replaceable unit (LRU) suitable for use in a vehicle includes a display driver to be coupled to a display command bus, a data storage element maintaining calibration information for the display driver, and a control module coupled to the display driver and the data storage element to identify a current state of an input command signal from the display command bus, identify an adjustment for the display driver based on the calibration information using the current state of the input command signal, and automatically operate the display driver in accordance with the adjustment.

### BRIEF DESCRIPTION OF THE DRAWINGS

Embodiments of the subject matter will hereinafter be described in conjunction with the following drawing figures, wherein like numerals denote like elements, and:
FIG. 1 is a block diagram of a vehicle system in an exemplary embodiment; and
FIG. 2 is a flow diagram of an exemplary display harmonization process suitable for use with the vehicle system of FIG. 1 in accordance with one or more embodiments.

### DETAILED DESCRIPTION

Embodiments of the subject matter described herein generally relate to systems and methods for harmonizing the display output by components onboard a vehicle for purposes of night vision operation. For example, a vehicle may include any number of onboard components, which may be manufactured by any number of different manufacturers. When different onboard components are connected to a common dimming command bus, each component may respond to changes to the dimming command (e.g., changes in the input voltage, input current, or the like) in a different manner relative to other components. This may be further exacerbated by the variations between different backlight sources or technologies that employ different driving mechanisms which exhibit different flux characteristics with respect to voltage and/or current, for example, incandescent or compact fluorescents may exhibit nonlinearities while light emitting diodes (LEDs) may behave linearly. Additionally, component aging along with voltage drops, noise, or other disturbances or variations with respect to the different signal paths from the dimming command bus to the respective components may further complicate the task of integrating multiple onboard components and achieving a common display output behavior across all components using a common dimming command bus. As a result, an excessive display output from an onboard component within the field of view of a vehicle operator wearing night vision goggles or similar equipment can saturate or otherwise impair the night vision, and thereby undesirably effect operation of the vehicle.

As described in greater detail below, embodiments of the subject matter described herein facilitates harmonizing display output by using curve fitting to determine calibration information for a display driver of a vehicle component, which, in turn can be utilized across other instances of the vehicle component across a fleet of similarly configured vehicles. For example, an output display characteristic (e.g., luminance, brightness, spectral characteristics, and/or the like) is measured or otherwise obtained for different settings or signal levels for the dimming command provided via the dimming command bus, resulting in uncompensated or uncalibrated display output values for different dimming command settings. For each dimming command setting, a corresponding adjustment to the respective uncompensated or uncalibrated display output value for achieving the desired output display characteristic at that respective dimming command setting for harmonizing with other onboard components is identified. Based on the relationships between the different dimming command settings and the desired output display characteristic adjustments, calibration information for the component across the full range of settings or signal levels for the dimming command bus is determined using a curve fitting technique (e.g., linear interpolation and/or extrapolation, quadratic or polynomial curve fitting, and/or the like).

The calibration information is stored or otherwise maintained locally at the vehicle component to facilitate automatically adjusting operation of its display driver(s) based on the state of the input dimming command in accordance with the calibration information to achieve a desired output display characteristic for that dimming command state. In this regard, the calibration information accounts for the performance characteristics or variations associated with the display element(s) or driver arrangement(s) of the onboard component with respect to the dimming command state while also compensating for variations in the signal path associated with the display element(s) and/or driver arrangement(s) without requiring any additional hardware. The calibration information may also be uploaded, offloaded, transmitted, or otherwise provided to other instances of the vehicle component deployed onboard other similarly configured vehicles. In this regard, the calibration information may be stored on a removeable data storage for loading onto other instances of the vehicle component.

By virtue of the subject matter described herein, a vehicle component may be integrated into an onboard environment and have its display behavior for night vision operation harmonized with respect to other components on a common dimming command bus independent of manufacturer, lighting technology, wiring configuration, and/or the like. It should be noted the subject matter described herein can be implemented in the context of any type of dimming command (e.g., voltage-based, current-based, frequency-based, PWM-based, and/or the like). As a result, a harmonized night vision onboard environment can be achieved with reduced costs or manual overhead, and moreover, can be readily deployed across a fleet of similarly-configured vehicles without duplicative efforts. While the subject matter described herein may be implemented in the context of any number of different types of components for any number of different types of vehicles, for purposes of explanation, the subject matter is described herein primarily in the context of line-replaceable units (LRUs) having corresponding display elements within the cockpit of an aircraft.

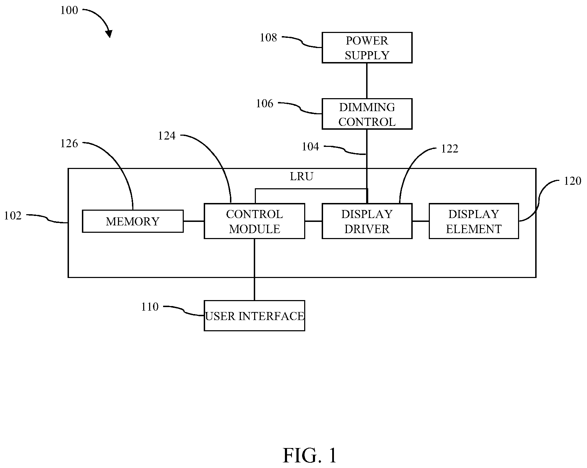

FIG. 1 depicts an exemplary embodiment of an aircraft system 100 including a line-replaceable unit (LRU) 102 having one or more display element(s) 120 that is harmonized with display elements of other components onboard the aircraft that are coupled to a common dimming command bus 104 as described herein. It should be appreciated that FIG. 1 depicts a simplified representation of the system 100 for purposes of explanation and ease of description, and FIG. 1 is not intended to limit the application or scope of the subject matter described herein in any way. In this regard, although FIG. 1 shows a single LRU 102, in practice, any number of additional LRUs may be coupled to the dimming command bus 104, as will be appreciated in the art. Furthermore, practical embodiments of the system 100 may include numerous other devices and components for providing additional functions and features, as will be appreciated in the art.

The dimming command bus 104 generally represents the communications bus, wiring, or other communications medium utilize to distribute a dimming command signal to multiple LRUs onboard the aircraft. The dimming control arrangement 106 generally represents the hardware, circuitry, logic, software, firmware, and/or the like that is coupled between a power supply 108 and the dimming command bus 104 and configured to generate or otherwise produce a dimming command signal having an electrical characteristic or state corresponding to a state of a user interface associated therewith. For example, the dimming control arrangement 106 may include or otherwise be associated a knob, switch, or the like that is adjustable through a range of potential states corresponding to different dimming settings, with the dimming control arrangement 106 varying a signal level, a signal frequency, or other characteristic of the electrical signal provided on the dimming command bus 104 to provide a dimming command state corresponding to the state of the user interface.

The display element 120 is realized as any sort of electronic display or light source utilized to depict information to a pilot, co-pilot, or other user onboard the aircraft. For example, the display element 120 could include or otherwise be realized as a liquid crystal display (LCD), a light emitting diode (LED) display, an organic light emitting diode (OLED) display, an electrophoretic display, a fluorescent display, an incandescent display, or another electronic display capable of presenting images under control of a processing module (e.g., a processor, controller, or the like). In yet other embodiments, the display element 120 may function as a backlight or frontlight for illuminating information depicted by or on another element. For example, the display element 120 could function as a backlight for one or more annunciator keys, an annunciator panel, and/or the like.

The display driver arrangement 122 generally represents the circuitry, logic, and/or other hardware and/or firmware that is coupled to the dimming command bus 104 between the dimming command bus 104 and the display element 120 to control or otherwise regulate one or more electrical characteristics of the input dimming command signal received from the dimming command bus 104 to generate a corresponding dimming command that is applied or otherwise provided to the display element 120. In this regard, operation of the display driver arrangement 122 may be adjusted or otherwise altered to produce a corresponding adjustment to the relationship between one or more electrical characteristics of the dimming command relative to the electrical characteristic(s) of the input dimming command signal to produce a corresponding adjustment to a display characteristic of the display element 120. For example, the control module 124 may adjust operation of the display driver arrangement 122 to increase or decrease a gain provided by the display driver arrangement 122 to produce a corresponding increase or decrease in the voltage level of the output dimming command signal provided to the display element 120 for a given voltage level of the input dimming command signal to thereby increase or decrease the brightness of the display element 120 for that input dimming command state. As described in greater detail below, in exemplary embodiments, calibration information including different adjustments to the display driver arrangement 122 for different states of the input dimming command signal to harmonize the display characteristic(s) of the display element 120 with other onboard components coupled to the dimming command bus 104 (e.g., by increasing or decreasing the display driver gain at different input command states) are utilized to automatically adjust or otherwise alter operation of the display driver arrangement 122 in real-time as a user adjusts the input dimming command signal (e.g., via dimming control arrangement 106) throughout its defined signal range to maintain harmonization of the display characteristic(s) throughout the range of the input dimming command signal.

The control module 124 generally represents the hardware, circuitry, processing logic, and/or other components of the LRU 102 that are configured to control operation of the display driver arrangement 122 in accordance with calibration information for the LRU 102 to harmonize the display output generated by the display element 120 with other onboard components, as described in greater detail below. Depending on the embodiment, the control module 124 may be implemented or realized with a general purpose processor, a controller, a microprocessor, a microcontroller, a content addressable memory, a digital signal processor, an application specific integrated circuit, a field programmable gate array, any suitable programmable logic device, discrete gate or transistor logic, processing core, discrete hardware components, or any combination thereof, designed to perform the functions described herein. The data storage element 126 (or memory) generally represents any sort of memory or other computer-readable medium (e.g., RAM memory, ROM memory, flash memory, registers, a hard disk, or another suitable non-transitory short- or long-term storage media), which is capable of storing computer-executable programming instructions or other data for execution that, when read and executed by the control module 124, cause the control module 124 to execute and perform one or more of the processes tasks, operations, and/or functions described herein.

In exemplary embodiments, a user interface 110 is coupled to the control module 124 of the LRU 102 to allow a user to interact with the LRU 102. The user interface may be realized as a keypad, touchpad, keyboard, mouse, touch panel, joystick, knob, line select key or another suitable device adapted to receive input from a user. In exemplary embodiments, the user interface may be incorporated into or otherwise integrated with the LRU 102, while in other embodiments, the user interface 110 may be separate from the LRU 102 and communicatively coupled to the control module 124 (e.g., via wiring, a wireless network, and/or the like).

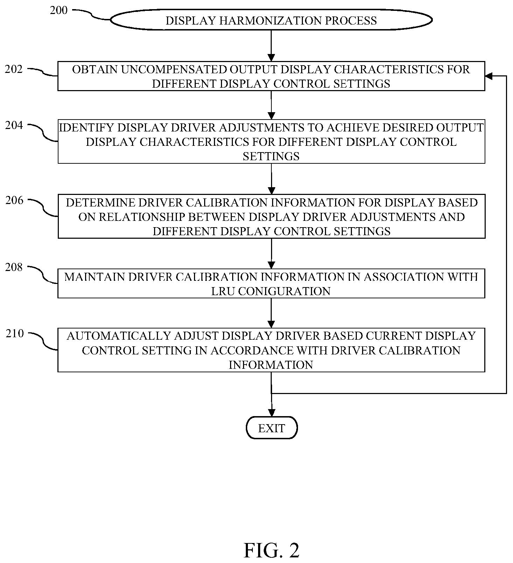

FIG. 2 depicts an exemplary embodiment of a display harmonization process 200 suitable for use with the LRU 102 of FIG. 1 to harmonize one or more display characteristics of the output generated by the display element 120 with respect to other onboard components coupled to the dimming command bus 104. The various tasks performed in connection with the illustrated process 200 may be implemented using hardware, firmware, software executed by processing circuitry, or any combination thereof. For illustrative purposes, the following description may refer to elements mentioned above in connection with FIG. 1. In practice, portions of the display harmonization process 200 may be performed by different elements of the system 100, however, exemplary embodiments may be described herein as primarily being performed by the control module 124. It should be appreciated that the display harmonization process 200 may include any number of additional or alternative tasks, the tasks need not be performed in the illustrated order and/or the tasks may be performed concurrently, and/or the display harmonization process 200 may be incorporated into a more comprehensive procedure or process having additional functionality not described in detail herein. Moreover, one or more of the tasks shown and described in the context of FIG. 2 could be omitted from a practical embodiment of the display harmonization process 200 as long as the intended overall functionality remains intact.

The display harmonization process 200 identifies or otherwise obtains uncompensated values for an output display characteristic of the display element for different display control settings and identifies or otherwise determines corresponding adjustments to the uncompensated values to achieve the desired output display characteristic for the different display control settings (tasks 202, 204). In this regard, the display harmonization process 200 captures or otherwise identifies a set of data points that is utilized to determine calibration information for the LRU 102 using curve fitting. For example, a user may operate the dimming control 106 to set the state of the dimming command signal provided on the dimming command bus 104 to a reference level for the dimming command signal (e.g., a dimming control setting of 10% of the range for the dimming command signal). While the dimming command signal is maintained at that state by the dimming control 106, the display driver 122 at the LRU 102 may provide a corresponding command signal level or state to the display element 120 to generate a reference output for that dimming control setting. A measured value for the display characteristic of interest (e.g., a brightness, a luminance, a spectral characteristic, and/or the like) is obtained by or at the LRU 102 or via some other measurement arrangement possessed or operated by the user. Thereafter, the user may operate the user interface 110 to input or otherwise provide an indication of the desired value for the display characteristic of interest at that dimming command setting (e.g., to harmonize the display output by LRU 102 with other LRUs coupled to the shared dimming command bus 104 at that particular setting), which, in turn, is utilized by the control module 124 to determine a corresponding adjustment to operation of the display driver 122 to achieve the desired output display characteristic at that respective dimming control setting. That said, in other embodiments, the user may operate the user interface 110 to manually adjust the operation of the display driver 122 via the control module 124. The control module 124 may store or otherwise maintain (e.g., in memory 126) the measured uncompensated value for the display characteristic in association with the dimming control setting (or state) along with the desired value for the display characteristic (or the desired adjustment to the display driver 122) associated with that dimming control setting (or state).

After obtaining an initial data point for calibrating the LRU 102, the user may operate the dimming control 106 to set the state of the dimming command signal provided on the dimming command bus 104 to a different reference level for the dimming command signal (e.g., a dimming control setting of 50%). In a similar manner as described above, the display driver 122 at the LRU 102 may provide a corresponding command signal level or state to the display element 120 to generate a reference output for that new dimming control setting, and a measured value for the display characteristic of interest is obtained. Thereafter, the user may operate the user interface 110 to input or otherwise provide an indication of the desired value for the display characteristic of interest at that new dimming command setting, which, in turn, is utilized by the control module 124 to determine a corresponding adjustment to operation of the display driver 122 to achieve the desired output display characteristic at that respective dimming control setting, or alternatively, the user may operate the user interface 110 to manually adjust the operation of the display driver 122 via the control module 124 until achieving the desired output display characteristic. The control module 124 similarly stores or otherwise maintains (e.g., in memory 126) the measured uncompensated value for the display characteristic in association with the updated dimming control setting (or state) along with the desired value for the display characteristic (or the desired adjustment to the output provided by the display driver 122) associated with that dimming control setting (or state). In this regard, the user may operate the dimming control 106 to sequentially vary the state of the dimming command signal and provide corresponding input for adjusting the uncompensated output display characteristic of the display element 120 to achieve a desired output display characteristic at the respective dimming command signal states, resulting in a set of data points that relate the dimming command signal state to the corresponding amount of adjustment to the display driver 122 required to harmonize the display element 120 and achieve the desired output display characteristic depending on the dimming command signal state received from the dimming command bus 104 at the input to the display driver 122.

In other embodiments, tasks 202 and 204 may be automated by automatically sweeping the dimming command signal through a sequence of dimming command signal states, automatically measuring the resulting uncompensated output display characteristics, and automatically determining the corresponding adjustments to the display driver 122 to achieve desired output display characteristics for the respective dimming command signal states based on the measured uncompensated values for the output display characteristic at the respective dimming command signal states.

After identifying or otherwise obtaining indicia of the display driver adjustments for different display control settings, the display harmonization process 200 calculates or otherwise determines calibration information for the display driver across the full range of potential display control states based on the relationship between the previously-obtained display driver adjustments for different reference display control settings (task 206). In this regard, the control module 124 utilizes a curve fitting technique to interpolate and/or extrapolate display driver adjustments for intermediary and/or edge dimming command states that were not tested or analyzed during the preceding data collection (e.g., task 202, 204). Thus, rather than manually calibrating the LRU 102 for every possible dimming command state, a smaller subset of calibration data points is obtained and utilized to generate calibration information for the full range of possible dimming command states, thereby reducing the amount of manual overhead required. In some examples not falling under the scope of the invention as claimed, the user may input or otherwise identify the desired curve fitting technique to be utilized. In embodiments according to the invention as claimed, the display harmonization process 200 automatically determines the curve fitting technique to be utilized. For example, in some examples not falling under the scope of the invention as claimed, the display harmonization process 200 may utilize a r-squared value, a cost function, or the like to identify which curve fitting technique best fits the previously-obtained data points and then select that curve fitting technique for use in generating the calibration information. In embodiments according to the invention as claimed, the display harmonization process 200 automatically identifies the curve fitting technique based on the display technology associated with the display element 120 and/or the display driver 122. According to these latter embodiments, for LED technology, the display harmonization process 200 utilizes a linear curve fitting technique, while a quadratic or other polynomial or nonlinear curve fitting is performed when the display element 120 includes an incandescent or fluorescent lighting element.

In exemplary embodiments, the display harmonization process 200 stores or otherwise maintains the calibration information in association with the current LRU configuration (task 208). In exemplary embodiments, the calibration information is stored or otherwise maintained in the memory 126 for subsequent utilization by the control module 124 when the LRU 102 is configured with the same type of display element 120 and/or display driver 122. In various embodiments, the calibration information may also be stored on a removeable data storage element (e.g., a flash drive or the like) that may be inserted into the LRU 102 and then removed and subsequently inserted into another instance of a similarly configured LRU to automatically store or load the calibration information onto that other instance of the LRU without requiring any manual calibration steps (e.g., tasks 202 and 204) to be performed with other instances of the LRU. In yet other embodiments, the calibration information may be uploaded, transmitted, or otherwise provided to any number of remote or external devices via a wireless network, a wired network, or any other sort of communications network, thereby allowing the calibration information to be distributed across multiple instances of similarly configured LRUs.

After the calibration information is determined, the display harmonization process 200 continues by automatically adjusting the display driver based on the current display control setting in accordance with the calibration information to achieve a harmonized display output (task 210). In this regard, the control module 124 is coupled to the dimming command bus 104 and/or the input to the display driver 122 to monitor the state of the input dimming command signal. Based on the state of the input dimming command signal, the control module 124 utilizes the calibration information maintained in the memory 126 to determine an appropriate adjustment to the display driver 122 to achieve the desired output display characteristic for the current dimming command setting. For example, the control module 124 may utilize the current input dimming command state to identify the appropriate calibration adjustment to the display driver to achieve the desired output display characteristic for the current dimming command state. In this regard, when the current input dimming command state does not correspond to one of the previously-calibrated reference states (e.g., from tasks 202 and 204), the control module 124 utilizes the display driver adjustment determined using curve fitting to adjust the manner in which the display driver 122 is operated to increase, decrease, or otherwise adjust the state of the dimming command signals provided to the display element 120 relative to the input dimming command signal received from the dimming command bus 104 so that the resulting output display characteristics are harmonized with other onboard components.

For purposes of explanation, an exemplary sequence of interactions with an LRU, such as LRU 102, to provide calibration data points for calibrating the LRU in connection with the display harmonization process 200 of FIG. 2 will now be described. In this regard, a user may interact with an LRU 102 by manipulating the user interface 110 to initiate the display harmonization process 200 at the LRU 102. In response, the LRU 102 may generate or otherwise provide a prompt on the display element 120 for the user to set the dimming command control 106 to the minimum dimming state. After the user sets the dimming command control 106 to the minimum dimming level, the user may interact with the user interface 110 to confirm or otherwise indicate the dimming command is at its minimum level. In response, the LRU 102 may measure or otherwise obtain the input dimming command state (e.g., the measured input voltage) and the resulting output display characteristic (e.g., the measured brightness). Thereafter, the user may manipulate the user interface 110 to increase or decrease the brightness of the display element 120 at that minimum dimming command setting, with the control module 124 determining the corresponding adjustment for the display driver 122 and operating the display driver 122 accordingly until the resulting brightness of the display element 120 corresponds to the user's desired minimum brightness. Once the adjusted brightness corresponds to the desired brightness, the user may manipulate the user interface 110 of the LRU 102 to set or otherwise store the measured input dimming command voltage, the measured uncompensated output brightness, and the desired display driver command adjustment for achieving the desired output brightness in the memory 126 for use as the minimum dimming command calibration data point.

The LRU 102 may then generate or otherwise provide a prompt on the display element 120 for the user to set the dimming command control 106 to the maximum input state. After the user sets the dimming command control 106 to the maximum dimming level, the user may similarly interact with the user interface 110 to confirm or otherwise indicate the dimming command is at its maximum level. The LRU 102 then measures or otherwise obtains the input dimming command voltage and the resulting brightness output by the display element 120. The user may then manipulate the user interface 110 to increase or decrease the brightness of the display element 120 at that maximum dimming command setting, with the control module 124 determining the corresponding adjustment for the display driver 122 and operating the display driver 122 accordingly until the resulting brightness of the display element 120 corresponds to the user's desired maximum brightness. Once the adjusted brightness corresponds to the desired maximum brightness, the user may manipulate the user interface 110 of the LRU 102 to set or otherwise store the measured input dimming command voltage, the measured uncompensated output brightness, and the desired display driver command adjustment for achieving the desired output brightness in the memory 126 for use as the maximum dimming command calibration data point.

Depending on the embodiment, the user may interact with the user interface 110 of the LRU 102 to define intermediary calibration data points and corresponding display driver adjustments for achieving a harmonized display output between the minimum and maximum dimming command states as desired by the user. Thereafter, the user may interact with the user interface 110 of the LRU 102 to set or otherwise define the type of curve fitting the user would like to use for calibrating and harmonizing the display output of the LRU 102 throughout the dimming command range between the minimum and maximum dimming command states. In response to setting quadratic as the desired curve fitting technique, the control module 124 performs a quadratic curve fit on the obtained calibration data points to generate calibration information in the form of a lookup table for display driver adjustments for the LRU 102 as desired incremental dimming command states throughout the dimming command range and stores or otherwise maintains the display driver adjustment lookup table in the memory 126. Thereafter, the control module 124 may measure or otherwise monitor the input dimming command voltage received from the dimming command bus 104 at the input to the display driver 122, obtain the corresponding display driver adjustment for that input dimming command voltage from the lookup table in the memory 126, then adjust or otherwise alter operation of the display driver 122 in accordance with that display driver adjustment to achieve the desired display brightness at that dimming command state.

It should be appreciated that the subject matter described herein eliminates the need for any centralized or unified control system or other external dependencies for harmonizing an LRU with other onboard LRUs. Rather, the LRU is independently configurable to provide a federated system where the individual LRUs can be directly connected to the dimming command bus and independently configured for harmonization without reliance on any intermediary or intervening components or systems that tune the signal input to the LRU. Additionally, the calibration information from one instance of an LRU is portable and may be transmitted or otherwise transferred to other instances of the LRU onboard other vehicles to facilitate harmonization of that LRU with existing LRUs across a fleet of similarly configured vehicles, thereby reducing the amount of time required for deploying and integrating a new LRU across a fleet of vehicles having existing LRUs that are already harmonized.

For the sake of brevity, conventional techniques related to electronic displays, cockpit displays, avionics, LRUs, curve fitting, night vision, and other aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

The subject matter may be described herein in terms of functional and/or logical block components, and with reference to symbolic representations of operations, processing tasks, and functions that may be performed by various computing components or devices. It should be appreciated that the various block components shown in the figures may be realized by any number of hardware components configured to perform the specified functions. For example, an embodiment of a system or a component may employ various integrated circuit components, e.g., memory elements, digital signal processing elements, logic elements, lookup tables, or the like, which may carry out a variety of functions under the control of one or more microprocessors or other control devices. Furthermore, embodiments of the subject matter described herein can be stored on, encoded on, or otherwise embodied by any suitable non-transitory computer-readable medium as computer-executable instructions or data stored thereon that, when executed (e.g., by a processing system), facilitate the processes described above.

The foregoing description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements directly connected to one another, additional intervening elements, devices, features, or components may be present in an embodiment of the depicted subject matter. In addition, certain terminology may also be used herein for the purpose of reference only, and thus are not intended to be limiting.

The foregoing detailed description is merely exemplary in nature and is not intended to limit the subject matter of the application and uses thereof. Furthermore, there is no intention to be bound by any theory presented in the preceding background, brief summary, or the detailed description.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the subject matter in any way. Rather, the foregoing detailed description will provide those skilled in the art with a convenient road map for implementing an exemplary embodiment of the subject matter. It should be understood that various changes may be made in the function and arrangement of elements described in an exemplary embodiment without departing from the scope of the subject matter as set forth in the appended claims. Accordingly, details of the exemplary embodiments or other limitations described above should not be read into the claims absent a clear intention to the contrary.

## Claims

1. A method of harmonizing a display brightness of a line-replaceable unit, LRU, onboard a vehicle with display elements of other components onboard the vehicle coupled to a common command bus (104), the LRU comprising a display element (120), a user interface (110), a control module (124), a data storage element (126) and a display driver (122) coupled between the common command bus (104) and the display element (120), the method being performed by the control module (124) and comprising:
obtaining adjustments to a relationship between one or more electrical characteristics of an output dimming command signal relative to the one or more electrical characteristics of an input dimming command signal to achieve a desired brightness for the display element (120) of the LRU at different states of the input dimming command signal from the common command bus, resulting in a plurality of data points maintaining associations between a respective adjustment and a respective state for the input dimming command signal, wherein the desired brightness for the display element (120) of the LRU is set by a user through the user interface;
determining calibration information for a range of the input dimming command signal based on relationships between the respective adjustments and the respective states for the input dimming command signal using the plurality of data points, wherein determining the calibration information comprises performing a curve fitting technique on the plurality of data points to obtain respective adjustments to the display driver (122) for respective states of the display command input throughout the range of the display command input, wherein determining the calibration information comprises automatically identifying the curve fitting technique based on a display technology associated with the display element (120), the curve fitting technique being automatically identified as a linear curve fitting technique when the display element (120) comprises light emitting diode, LED, technology and being automatically identified as a quadratic or other polynomial or nonlinear curve fitting technique when the display element (120) comprises an incandescent or fluorescent lighting element;
maintaining the calibration information in the data storage element (126) of the LRU coupled to the control module (124) of the LRU; and
automatically adjusting operation of the display driver (122) of the LRU based on a subsequent state of the input dimming command signal to the LRU in accordance with the calibration information maintained in the data storage element (126), wherein the automatically adjusting the operation of the display driver (122) is to achieve the desired brightness at the subsequent state of the input dimming command signal and is based on a subset of the calibration information associated with the subsequent state of the input dimming command signal.

2. The method of claim 1, wherein the common command bus comprises a dimming command bus (104).

3. The method of claim 1, further comprising transmitting the calibration information to a second LRU onboard another vehicle, wherein a second control module (124) of the second LRU automatically adjusts operation of a second display driver (122) of the second LRU in accordance with the calibration information obtained from the LRU.

4. The method of claim 1, further comprising transferring the calibration information to a second data storage element (126) of a second LRU onboard another vehicle, wherein a second control module (124) of the second LRU automatically adjusts operation of a second display driver (122) of the second LRU in accordance with the calibration information obtained from the LRU.

5. A line-replaceable unit, LRU, suitable for use in a vehicle, the LRU comprising:
a display element (120);
a display driver (122) to be coupled to a display command bus;
a user interface (110);
a data storage element (126) to maintain calibration information for the display driver (122); and
a control module (124) coupled to the display driver (122) and the data storage element (126) to identify a current state of an input dimming command signal from the display command bus, identify an adjustment to a relationship between one or more electrical characteristics of an output dimming command signal relative to the one or more electrical characteristics of the input dimming command signal for the display driver (122) based on the calibration information using the current state of the input dimming command signal, and automatically operate the display driver (122) in accordance with the adjustment, wherein the display driver (122) translates the input dimming command signal into the output dimming command signal based on the current state in accordance with the adjustment to achieve a desired display brightness for the display element (120) set by a user through the user interface, wherein the control module (124) is configured to:
obtain adjustments to the display driver (122) for achieving the desired brightness for the display element (120) at different states of the input dimming command signal from the display command bus, resulting in a plurality of data points maintaining associations between a respective adjustment and a respective state for the input dimming command signal;
determine the calibration information for the display driver (122) for a range of the input dimming command signal based on relationships between the adjustments and the different states for the input dimming command signal using the plurality of data points by performing a curve fitting technique on the plurality of data points to obtain respective adjustments to the display driver (122) for respective states of the display command input throughout the range of the display command input;
automatically identify the curve fitting technique based on a display technology associated with the display element (120), the curve fitting technique being automatically identified as a linear curve fitting technique when the display element (120) comprises light emitting diode, LED, technology and being automatically identified as a quadratic or other polynomial or nonlinear curve fitting technique when the display element (120) comprises an incandescent or fluorescent lighting element; and
store the calibration information in the data storage element (126).

6. The LRU of claim 5, wherein the display command bus comprises a dimming command bus (104).

7. The LRU of claim 5, wherein the one or more electrical characteristics include voltage or current.

8. A system, comprising a plurality of LRUs according to Claim 5, wherein all LRUs are connected to a common dimming command bus and wherein the calibration information of, and the adjustment by, the control module of each LRU is configured to harmonize a display brightness for the plurality of LRUs for any input dimming command signal.

## Patentansprüche

1. Verfahren zum Harmonisieren einer Anzeigehelligkeit einer auswechselbaren Einheit, LRU, an Bord eines Fahrzeugs mit Anzeigeelementen von anderen Komponenten an Bord des Fahrzeugs, die mit einem gemeinsamen Befehlsbus (104) gekoppelt sind, wobei die LRU ein Anzeigeelement (120), eine Benutzeroberfläche (110), ein Steuermodul (124), ein Datenspeicherelement (126) und einen Anzeigetreiber (122) umfasst, der zwischen dem gemeinsamen Befehlsbus (104) und dem Anzeigeelement (120) gekoppelt ist, wobei das Verfahren von dem Steuermodul (124) ausgeführt wird, und umfasst:
Erhalten von Einstellungen für eine Beziehung zwischen einer oder mehreren elektrischen Eigenschaften eines Ausgangs-Dimmbefehlssignals relativ zu einer oder mehreren elektrischen Eigenschaften eines Eingangs-Dimmbefehlssignals, um eine gewünschte Helligkeit für das Anzeigeelement (120) der LRU bei unterschiedlichen Status des Eingangs-Dimmbefehlssignals von dem gemeinsamen Befehlsbus zu erreichen, was dazu führt, dass eine Mehrzahl von Datenpunkten die Zuordnungen zwischen einer jeweiligen Einstellung und einem jeweiligen Status für das Eingangs-Dimmbefehlssignal aufrechterhält, wobei die gewünschte Helligkeit für das Anzeigeelement (120) der LRU von einem Benutzer über die Benutzeroberfläche gesetzt wird;
Bestimmen von Kalibrierungsinformationen für einen Bereich des Eingangs-Dimmbefehlssignals basierend auf Beziehungen zwischen den jeweiligen Einstellungen und den jeweiligen Status für das Eingangs-Dimmbefehlssignal unter Verwendung der Mehrzahl von Datenpunkten, wobei das Bestimmen der Kalibrierungsinformationen das Durchführen einer Kurvenanpassungstechnik auf der Mehrzahl von Datenpunkten umfasst, um jeweilige Einstellungen an dem Anzeigetreiber (122) für jeweilige Status des Anzeigebefehlseingangs über den gesamten Bereich des Anzeigebefehlseingangs zu erhalten, wobei das Bestimmen der Kalibrierungsinformationen das automatische Identifizieren der Kurvenanpassungstechnik basierend auf einer dem Anzeigeelement (120) zugeordneten Anzeigetechnologie umfasst, wobei die Kurvenanpassungstechnik automatisch als lineare Kurvenanpassungstechnik identifiziert wird, wenn das Anzeigeelement (120) eine Leuchtdioden, LED, -Technologie umfasst, und automatisch als quadratische oder andere polynomiale oder nicht lineare Kurvenanpassungstechnik identifiziert wird, wenn das Anzeigeelement (120) ein Glüh- oder Leuchtstofflampenelement umfasst;
Aufrechterhalten der Kalibrierungsinformationen im Datenspeicherelement (126) der LRU, das mit dem Steuermodul (124) der LRU gekoppelt ist; und
automatisches Einstellen des Betriebs des Anzeigetreibers (122) der LRU basierend auf einem nachfolgenden Status des Eingangs-Dimmbefehlssignals an die LRU gemäß den in dem Datenspeicherelement (126) gespeicherten Kalibrierungsinformationen, wobei das automatische Einstellen des Betriebs des Anzeigetreibers (122) dazu dient, die gewünschte Helligkeit im nachfolgenden Status des Eingangs-Dimmbefehlssignals zu erreichen, und basierend auf einer Teilmenge der Kalibrierungsinformationen basiert, die dem nachfolgenden Status des Eingangs-Dimmbefehlssignals zugeordnet sind.

2. Verfahren nach Anspruch 1, wobei der gemeinsame Befehlsbus einen Dimmbefehlsbus (104) umfasst.

3. Verfahren nach Anspruch 1, das ferner das Übertragen der Kalibrierungsinformationen an eine zweite LRU an Bord eines anderen Fahrzeugs umfasst, wobei ein zweites Steuermodul (124) der zweiten LRU automatisch den Betrieb eines zweiten Anzeigetreibers (122) der zweiten LRU gemäß den von der LRU erhaltenen Kalibrierungsinformationen einstellt.

4. Verfahren nach Anspruch 1, das ferner das Übertragen der Kalibrierungsinformationen an ein zweites Datenspeicherelement (126) einer zweiten LRU an Bord eines anderen Fahrzeugs umfasst, wobei ein zweites Steuermodul (124) der zweiten LRU automatisch den Betrieb eines zweiten Anzeigetreibers (122) der zweiten LRU gemäß den von der LRU erhaltenen Kalibrierungsinformationen einstellt.

5. Auswechselbare Einheit, LRU, die zur Verwendung in einem Fahrzeug geeignet ist, wobei die LRU umfasst:
ein Anzeigeelement (120);
einen Anzeigetreiber (122), der mit einem Anzeigebefehlsbus gekoppelt werden soll;
eine Benutzeroberfläche (110);
ein Datenspeicherelement (126) zum Aufrechterhalten von Kalibrierungsinformationen für den Anzeigetreiber (122); und
ein Steuermodul (124), das mit dem Anzeigetreiber (122) und dem Datenspeicherelement (126) gekoppelt ist, um einen aktuellen Status eines Eingangs-Dimmbefehlssignals von dem Anzeigebefehlsbus zu identifizieren, eine Einstellung zu einer Beziehung zwischen einer oder mehreren elektrischen Eigenschaften eines Ausgangs-Dimmbefehlssignals relativ zu der einen oder den mehreren elektrischen Eigenschaften des Eingangs-Dimmbefehlssignals für den Anzeigetreiber (122) basierend auf den Kalibrierungsinformationen unter Verwendung des aktuellen Status des Eingangs-Dimmbefehlssignals zu identifizieren, und den Anzeigetreiber (122) gemäß der Einstellung automatisch zu betreiben, wobei der Anzeigetreiber (122) das Eingangs-Dimmbefehlssignal basierend auf dem aktuellen Status gemäß der Einstellung in das Ausgangs-Dimmbefehlssignal umwandelt, um eine gewünschte Anzeigehelligkeit für das Anzeigeelement (120) zu erreichen, die von einem Benutzer über die Benutzeroberfläche eingestellt wurde, wobei das Steuermodul (124) dazu konfiguriert ist, um:
Einstellungen für einen Anzeigetreiber (122) zu erhalten, um die gewünschte Helligkeit für das Anzeigeelement (120) bei unterschiedlichen Status des Eingangs-Dimmbefehlssignals von dem Anzeigebefehlsbus zu erreichen, was dazu führt, dass eine Mehrzahl von Datenpunkten die Zuordnungen zwischen einer jeweiligen Einstellung und einem jeweiligen Status für das Eingangs-Dimmbefehlssignal aufrechterhält;
die Kalibrierungsinformationen für den Anzeigetreiber (122) für einen Bereich des Eingangs-Dimmbefehlssignals basierend auf Beziehungen zwischen den Einstellungen und den unterschiedlichen Status für das Eingangs-Dimmbefehlssignal unter Verwendung der Mehrzahl von Datenpunkten zu bestimmen, indem eine Kurvenanpassungstechnik auf der Mehrzahl von Datenpunkten durchgeführt wird, um jeweilige Einstellungen für den Anzeigetreiber (122) für jeweilige Status des Anzeigebefehlseingangs über den gesamten Bereich des Anzeigebefehlseingangs zu erhalten;
die Kurvenanpassungstechnik basierend auf einer dem Anzeigeelement (120) zugeordneten Anzeigetechnologie automatisch zu identifizieren, wobei die Kurvenanpassungstechnik automatisch als lineare Kurvenanpassungstechnik identifiziert wird, wenn das Anzeigeelement (120) eine Leuchtdioden, LED, -Technologie umfasst, und automatisch als quadratische oder andere polynomiale oder nichtlineare Kurvenanpassungstechnik identifiziert wird, wenn das Anzeigeelement (120) ein Glüh- oder Leuchtstofflampenelement umfasst; und
die Kalibrierungsinformationen im Datenspeicherelement (126) zu speichern.

6. LRU nach Anspruch 5, wobei der gemeinsame Befehlsbus einen Dimmbefehlsbus (104) umfasst.

7. LRU nach Anspruch 5, wobei die eine oder mehreren elektrischen Eigenschaften Spannung oder Strom einschließen.

8. System, das eine Mehrzahl von LRUs nach Anspruch 5 umfasst, wobei alle LRUs mit einem gemeinsamen Dimmbefehlsbus verbunden sind, und wobei die Kalibrierungsinformationen und die Einstellung durch das Steuermodul jeder LRU dazu konfiguriert sind, eine Anzeigehelligkeit für die Mehrzahl von LRUs für jedes Eingangs-Dimmbefehlssignal zu harmonisieren.

## Revendications

1. Procédé d'harmonisation d'une luminosité d'affichage d'une unité remplaçable en ligne, LRU, à bord d'un véhicule avec des éléments d'affichage d'autres composants à bord du véhicule couplés à un bus de commande commun (104), la LRU comprenant un élément d'affichage (120), une interface utilisateur (110), un module de contrôle (124), un élément de stockage de données (126) et un pilote d'affichage (122) couplés entre le bus de commande commun (104) et l'élément d'affichage (120), le procédé étant réalisé par le module de contrôle (124) et comprenant :
l'obtention d'ajustements d'une relation entre une ou plusieurs caractéristiques électriques d'un signal de commande de gradation de sortie par rapport aux une ou plusieurs caractéristiques électriques d'un signal de commande de gradation d'entrée pour obtenir une luminosité souhaitée pour l'élément d'affichage (120) de la LRU à différents états du signal de commande de gradation d'entrée provenant du bus de commande commun, résultant en une pluralité de points de données conservant des associations entre un ajustement respectif et un état respectif pour le signal de commande de gradation d'entrée, dans lequel la luminosité souhaitée pour l'élément d'affichage (120) de la LRU est définie par un utilisateur par le biais de l'interface utilisateur ;
la détermination d'informations d'étalonnage pour une plage du signal de commande de gradation d'entrée sur la base de relations entre les ajustements respectifs et les états respectifs du signal de commande de gradation d'entrée en utilisant la pluralité de points de données, dans lequel la détermination des informations d'étalonnage comprend la réalisation d'une technique d'ajustement de courbe sur la pluralité de points de données pour obtenir des ajustements respectifs du pilote d'affichage (122) pour des états respectifs de l'entrée de commande d'affichage sur toute la plage de l'entrée de commande d'affichage, dans lequel la détermination des informations d'étalonnage comprend l'identification automatique de la technique d'ajustement de courbe sur la base d'une technologie d'affichage associée à l'élément d'affichage (120), la technique d'ajustement de courbe étant automatiquement identifiée comme une technique d'ajustement de courbe linéaire lorsque l'élément d'affichage (120) comprend une technologie de diode électroluminescente, DEL, et étant automatiquement identifiée comme une technique d'ajustement de courbe quadratique ou autre technique d'ajustement de courbe polynomiale ou non linéaire lorsque l'élément d'affichage (120) comprend un élément d'éclairage incandescent ou fluorescent ;
la conservation des informations d'étalonnage dans l'élément de stockage de données (126) de la LRU couplé au module de contrôle (124) de la LRU ; et
l'ajustement automatique du fonctionnement du pilote d'affichage (122) de la LRU sur la base d'un état ultérieur du signal de commande de gradation d'entrée destinée à la LRU conformément aux informations d'étalonnage conservées dans l'élément de stockage de données (126), dans lequel l'ajustement automatique du fonctionnement du pilote d'affichage (122) consiste à obtenir la luminosité souhaitée à l'état ultérieur du signal de commande de gradation d'entrée et est basé sur un sous-ensemble des informations d'étalonnage associées à l'état ultérieur du signal de commande de gradation d'entrée.

2. Procédé selon la revendication 1, dans lequel le bus de commande commun comprend un bus de commande de gradation (104).

3. Procédé selon la revendication 1, comprenant en outre la transmission des informations d'étalonnage à une deuxième LRU à bord d'un autre véhicule, dans lequel un deuxième module de contrôle (124) de la deuxième LRU ajuste automatiquement le fonctionnement d'un deuxième pilote d'affichage (122) de la deuxième LRU conformément aux informations d'étalonnage obtenues à partir de la LRU.

4. Procédé selon la revendication 1, comprenant en outre le transfert des informations d'étalonnage vers un deuxième élément de stockage de données (126) d'une deuxième LRU à bord d'un autre véhicule, dans lequel un deuxième module de contrôle (124) de la deuxième LRU ajuste automatiquement le fonctionnement d'un deuxième pilote d'affichage (122) de la deuxième LRU conformément aux informations d'étalonnage obtenues à partir de la LRU.

5. Unité remplaçable en ligne, LRU, adaptée à une utilisation dans un véhicule, la LRU comprenant :
un élément d'affichage (120) ;
un pilote d'affichage (122) devant être couplé à un bus de commande d'affichage ;
une interface utilisateur (110) ;
un élément de stockage de données (126) pour conserver les informations d'étalonnage pour le pilote d'affichage (122) ; et
un module de contrôle (124) couplé au pilote d'affichage (122) et à l'élément de stockage de données (126) pour identifier un état actuel d'un signal de commande de gradation d'entrée provenant du bus de commande d'affichage, identifier un ajustement d'une relation entre une ou plusieurs caractéristiques électriques d'un signal de commande de gradation de sortie par rapport aux une ou plusieurs caractéristiques électriques du signal de commande de gradation d'entrée du pilote d'affichage (122) sur la base des informations d'étalonnage en utilisant l'état actuel du signal de commande de gradation d'entrée, et faire fonctionner automatiquement le pilote d'affichage (122) conformément à l'ajustement, dans lequel le pilote d'affichage (122) convertit le signal de commande de gradation d'entrée en signal de commande de gradation de sortie sur la base de l'état actuel conformément à l'ajustement pour obtenir une luminosité d'affichage souhaitée pour l'élément d'affichage (120), définie par un utilisateur par le biais de l'interface utilisateur, dans lequel le module de contrôle (124) est configuré pour :
obtenir des ajustements du pilote d'affichage (122) pour obtenir la luminosité souhaitée pour l'élément d'affichage (120) à différents états du signal de commande de gradation d'entrée provenant du bus de commande d'affichage, résultant en une pluralité de points de données conservant des associations entre un réglage respectif et un état respectif pour le signal de commande de gradation d'entrée ;
déterminer les informations d'étalonnage pour le pilote d'affichage (122) pour une plage du signal de commande de gradation d'entrée sur la base de relations entre les ajustements et les différents états pour le signal de commande de gradation d'entrée en utilisant la pluralité de points de données en réalisant une technique d'ajustement de courbe sur la pluralité de points de données pour obtenir des ajustements respectifs du pilote d'affichage (122) pour les états respectifs de l'entrée de commande d'affichage sur toute la plage de l'entrée de commande d'affichage ;
identifier automatiquement la technique d'ajustement de courbe sur la base d'une technologie d'affichage associée à l'élément d'affichage (120), la technique d'ajustement de courbe étant automatiquement identifiée comme une technique d'ajustement de courbe linéaire lorsque l'élément d'affichage (120) comprend une technologie de diode électroluminescente, DEL, et étant automatiquement identifiée comme une technique d'ajustement de courbe quadratique ou autre technique d'ajustement de courbe polynomiale ou non linéaire lorsque l'élément d'affichage (120) comprend un élément d'éclairage incandescent ou fluorescent ; et
stocker les informations d'étalonnage dans l'élément de stockage de données (126).

6. LRU selon la revendication 5, dans laquelle le bus de commande d'affichage comprend un bus de commande de gradation (104).

7. LRU selon la revendication 5, dans laquelle les une ou plusieurs caractéristiques électriques incluent la tension ou le courant.

8. Système comprenant une pluralité de LRU selon la revendication 5, dans lequel toutes les LRU sont connectées à un bus de commande de gradation commun et dans lequel les informations d'étalonnage du module de contrôle de chaque LRU et le réglage par celui-ci, sont configurés pour harmoniser une luminosité d'affichage pour la pluralité de LRU pour tout signal de commande de gradation d'entrée.
